# EUROPÄISCHE PATENTSCHRIFT

(11) **EP 0 731 207 B1**
(45) Veröffentlichungstag und Bekanntmachung des Hinweises auf die Patenterteilung: **02.07.1997**
(21) Anmeldenummer: 96103535.9
(22) Anmeldetag: 07.03.1996
(51) Int. Cl.: D06M 15/263, D06M 15/29, D06M 15/233, D06M 15/227, D06M 15/356, D06N 5/00, D04H 1/64

(54) **Bindemittel für textile Flächengebilde**
Binder for textile material
Liant pour matériau textile

(30) Priorität: 09.03.1995 DE 19508455
(43) Veröffentlichungstag der Anmeldung: 11.09.1996
(73) Patentinhaber: Wacker-Chemie GmbH, 81737 München (DE)
(72) Erfinder: Lumpp, Andreas, Dr., 60599 Frankfurt (DE); Kögler, Gerhard, Dr., 84508 Burgkirchen (DE)
(74) Vertreter: Schuderer, Michael

(56) Entgegenhaltungen:
- EP-A- 0 058 239
- EP-A- 0 084 772
- EP-A- 0 306 716
- EP-A- 0 370 326
- EP-A- 0 407 799
- EP-A- 0 545 073
- FR-A- 2 195 977
- DATABASE WPI Section Ch, Week 9215 Derwent Publications Ltd., London, GB; Class A18, AN 92-120188 XP002005724 & JP-A-04 063 816 (HOECHST GOSEI KK) , 28.Februar 1992

## Beschreibung

Die Erfindung betrifft die Verwendung von wäßrigen Kunststoffdispersionen als Bindemittel für textile Flächengebilde, speziell als Bindemittel zur Ausrüstung von Dachbahnen mit hoher Festigkeit, geringer Dehnung und hoher Hydrophobizität.

Für die Ausrüstung von textilen Flächengebilden, beispielsweise Spinnvliese aus Polyesterfaser oder Glasfaservliese, in der Anwendung als Trägermaterial in Dachbahnen, ist es erforderlich, daß das Bindemittel dem Textil einen wasserabweisenden (hydrophoben) Charakter verleiht, und das damit gebundene Textil bei thermischer Belastung eine hohe Reißfestigkeit bei möglichst geringer Dehnung besitzt. Wegen der hohen Belastungen, denen das Trägermaterial, beispielsweise bei der Beschichtung mit Bitumen im Bitumenbad, ausgesetzt ist, wird auch ein thermoelastisches Verhalten (geringe Dehnung bei Wärmebelastung) der gebundenen Textilien gewünscht. Allein durch die Verwendung eines hart eingestellten Bindemittels ist diese Kombination von Eigenschaften nicht zu erreichen.

Aus der EP-A 306716 (US-A 4959249) sind formaldehydarme, vernetzbare Bindemittel für textile Fasergebilde, auf der Basis von wäßrigen Vinylester-Dispersionen, bekannt. Zur Reduzierung der Formaldehyd-Freisetzung sind in den Vinylester-Copolymerisaten die N-Methylol-funktionellen Comonomereimheiten ganz oder teilweise durch Vinylsilan-Einheiten ersetzt. Die damit gebundenen Vliese zeigen vergleichbare Naßfestigkeit und Lösungsmittelfestigkeit wie ausschließlich N-Methylolacrylamid-haltige Bindemittel und werden auch zur Anwendung als Dachbahnbeschichtung empfohlen. Das derzeit gewünschte Anforderungsprofil für Trägermaterialien für Dachbahnen, nämlich Hydrophobizität, hohe Reißfestigkeit und geringe Wärmedehnung, kann bei Verwendung der dort beschriebenen Dispersionen auf der Basis von Vinylacetat-Vinylsilan-Copolymeren als Textilbindemittel nicht erreicht werden.

Die JP-A 04/63816 (Derwent-Abstract AN 92-120188) betrifft wäßrige Emulsionen von Copolymerisaten, welche Vinylsilan-, Carbonsäure- und Diallylester-Einheiten enthalten. Die Polymeremulsion wird als Behandlungs-, Beschichtungs- und Bindemittel für eine Vielzahl unterschiedlicher Materialien empfohlen. Entscheidend ist offenbar die Gegenwart von ungesättigten Carbonsäure-Einheiten, um hohe Anteile an Diallylester-Einheiten im Copolymer zu ermöglichen und damit die Viskosität der Emulsion und Alkaliresistenz des Copolymerisats zu erhöhen. Das obengenannte Anforderungsprofil für Trägermaterialien für Dachbahnen kann mit der Comonomerkombination Vinylsilan/Diallylester nicht erhalten werden.

Es bestand daher die Aufgabe, wäßrige Bindemittel für textile Flächengebilde zur Verfügung zu stellen, deren Verwendung zu Trägermaterialien führt, welche sich durch hohe Hydrophobizität, hohe Reißfestigkeit und geringe Wärmedehnung auszeichnen.

Gegenstand der Erfindung ist die Verwendung von wäßrigen Kunststoffdispersionen als Bindemittel für textile Flächengebilde, dadurch gekennzeichnet, daß als Bindemittel eine wäßrige Dispersion eines vernetzbaren und vorvernetzten Copolymerisats mit einer Glasübergangstemperatur Tg von 0 bis +80°C eingesetzt wird, herstellbar durch Emulsionspolymerisation von
a) 50 bis 90 Gewichtsteilen eines oder mehrerer Monomere aus der Gruppe der Vinylester von verzweigten oder unverzweigten Carbonsäuren mit 1 bis 4 C-Atomen, der Acrylsäureester oder Methacrylsäureester von Alkoholen mit 1 bis 10 C-Atomen und Styrol,
b) 10 bis 50 Gewichtsteile eines oder mehrerer Monomere aus der Gruppe der Vinylester von α-verzweigten Monocarbonsäuren mit 5 bis 10 C-Atomen, Vinylpivalat, Diisopropylfumarat, Diisopropylmaleinat, Di-tert.-butylmaleinat, Vinylchlorid,
c) 1.0 bis 10.0 Gewichtsteile eines oder mehrerer Monomere aus der Gruppe N-Methylolacrylamid, N-Methylolmethacrylamid und deren N-(Alkoxymethyl)- und N-(Acyloxymethyl)-derivate mit 1 bis 6 C-Atomen im Alkyl- oder Acyl-Rest,
d) 1.0 bis 4.0 Gewichtsteile eines oder mehrerer Monomere aus der Gruppe der olefinisch ungesättigten, hydrolysierbaren Silane, und
e) 0.1 bis 2.0 Gewichtsteile mehrfach ethylenisch ungesättigte Verbindungen.

Beispiele für Monomere a) sind bei den Vinylestern Vinylacetat, Vinylpropionat, Vinylbutyrat, 1-Methyl-vinylacetat. Bevorzugt wird Vinylacetat.

Als Monomer a) geeignete Acrylsäureester und Methacrylsäureester sind Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat. Bevorzugt werden Methylacrylat, Methylmethacrylat und n-Butylacrylat.

Bevorzugte Monomere b) sind die Vinylester von α-verzweigten Monocarbonsäuren mit 5 oder 9 bis 10 C-Atomen, beispielsweise VeoVa9^{R} und VeoVa10^{R}.

Bevorzugte Monomere c) sind N-Methylolacrylamid, N-Methylolmethacrylamid, N-(Isobutoxymethyl)-acrylamid, N-(n-Butoxymethyl)-acrylamid.

Beispiele für die Monomeren d) sind γ-Acryl- bzw. γ-Methacryloxypropyltri(alkoxy)silane und Vinyltrialkoxysilane, wobei als Alkoxygruppen z.B. Methoxy-, Ethoxy-, Methoxyethylen-, Ethoxyethylen-, Methoxypropylenglykolether- bzw. Ethoxypropylenglykolether-Reste eingesetzt werden können. Weiterhin ist das Trisacetoxyvinylsilan verwendbar. Bevorzugt werden Vinyltriethoxysilan, γ-Methacryloxypropyltriethoxysilan und Trisacetoxyvinylsilan.

Geeignete Monomere e) sind beispielsweise Divinyladipat, 1,9-Decadien, Allylmethacrylat, Diallylmaleat, Triallylcyanurat. Bevorzugt werden 1,9-Decadien und Divinyladipat eingesetzt.

Gegebenenfalls enthalten die Copolymerisate noch 0.05 bis 2.0 Gewichtsteile ein oder mehrere Hilfsmonomere aus der Gruppe der ethylenisch ungesättigten Carbonsäuren, vorzugsweise Acrylsäure oder Methacrylsäure, aus der Gruppe der ethylenisch ungesättigten Carbonsäureamide, vorzugsweise Acrylamid und 2-Acrylamidopropansulfonsäure, aus der Gruppe der ethylenisch ungesättigten Sulfonsäuren bzw. deren Salze, vorzugsweise Vinylsulfonsäure.

Die besonders bevorzugten Copolymerisate enthalten
a) 70 bis 90 Gewichtsteile Vinylacetat-Einheiten oder 70 bis 90 Gewichtsteile Vinylacetat- und (Meth)acrylat-Einheiten, wobei der Anteil an (Meth)acrylat-Einheiten bis zu 20 Gewichtsteile beträgt,
b) 10 bis 30 Gewichtsteile Einheiten von Vinylestern von α-verzweigten Monocarbonsäuren mit 9 bis 10 C-Atomen,
c) 1.0 bis 5.0 Gewichtsteile N-Methylolacrylamid- und/oder N-(Isobutoxymethyl)acrylamid-Einheiten,
d) 1.0 bis 3.0 Gewichtsteile Vinyltriethoxysilan- und/oder γ-Methacryloxypropyltriethoxysilan-Einheiten,
e) 0.1 bis 1.0 Gewichtsteile 1,9-Decadien- und/oder Divinyladipat-Einheiten.

Die Herstellung der Vinylester-Copolymerisate bzw. der (Meth)acrylsäureester-Copolymerisate erfolgt nach dem Emulsionspolymerisationsverfahren. Die Polymerisation kann diskontinuierlich oder kontinuierlich, mit oder ohne Verwendung von Saatlatices, unter Vorlage aller oder einzelner Bestandteile des Reaktionsgemisches, oder unter teilweiser Vorlage und Nachdosierung der oder einzelner Bestandteile des Reaktionsgemisches, oder nach dem Dosierverfahren ohne Vorlage durchgeführt werden. Alle Dosierungen erfolgen vorzugsweise im Maße des Verbrauchs der jeweiligen Komponente.

In einer bevorzugten Ausführungsform werden 5 bis 25 Gew.% der Comonomere vorgelegt. Besonders bevorzugt werden die Comonomer-Komponenten a) und b) teilweise vorgelegt, die vernetzbare Comonomer-Komponente c) teilweise vorgelegt, und die vernetzbare Comonomer-Komponente d) sowie die vorvernetzende Comonomer-Komponente e) teilweise vorgelegt oder während der Polymerisation zudosiert.

Die Polymerisation wird in Luft- oder Stickstoff-Atmosphäre in einem Temperaturbereich von 40 bis 80°C durchgeführt und mit den für die Emulsionspolymerisation üblicherweise eingesetzten Methoden eingeleitet. Die Initiierung erfolgt mittels der üblichen wasserlöslichen Radikalbildner, die vorzugsweise in Mengen von 0.01 bis 1.0 Gew%, bezogen auf das Gesamtgewicht der Monomeren, eingesetzt werden. Beispiele hierfür sind Ammonium- und Kaliumperoxodisulfat; Wasserstoffperoxid; Alkylhydroperoxide, wie tert.-Butylhydroperoxid. Gegebenenfalls können die genannten radikalischen Initiatoren auch in bekannter Weise mit 0.01 bis 0.5 Gew%, bezogen auf das Gesamtgewicht der Monomeren, Reduktionsmittel kombiniert werden. Geeignet sind zum Beispiel Formaldehydsulfoxylat-Salze, Natriumbisulfit oder Ascorbinsäure. Bei der Redoxinitiierung werden dabei vorzugsweise eine oder beide Redox-Katalysatorkomponenten während der Polymerisation dosiert.

Als Dispergiermittel können alle üblicherweise bei der Emulsionspolymerisation verwendeten Emulgatoren und Schutzkolloide eingesetzt werden. Vorzugsweise werden 1 bis 6 Gew%, bezogen auf das Gesamtgewicht der Monomeren, an Emulgator eingesetzt. Geeignet sind beispielsweise anionische Tenside, wie Alkylsulfate mit einer Kettenlänge von 8 bis 18 C-Atomen, Alkyl- und Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen Fettsäuresulfate oder Fettsäuresulfonate. Geeignete nichtionische Tenside sind beispielsweise Alkylpolyglykolether oder Alkylarylpolyglykolether mit 8 bis 40 Ethylenoxideinheiten.

Gegebenenfalls können Schutzkolloide, vorzugsweise in Mengen von bis zu 15 Gew%, bezogen auf das Gesamtgewicht der Monomeren, eingesetzt werden. Beispiele hierfür sind Vinylalkohol/Vinylacetat-Copolymere mit einem Gehalt von 80 bis 100 Mol% Vinylalkoholeinheiten, Hydroxyethylcellulosen mit einem Substitutionsgradbereich von 1.5 bis 3.

Der für die Polymerisation gewünschte pH-Bereich, der im allgemeinen zwischen 2 und 7 liegt, kann in bekannter Weise durch Säuren, Basen oder übliche Puffersalze, wie Alkaliphosphate oder Alkalicarbonate, eingestellt werden.

Die damit erhältlichen vernetzbaren, vorvernetzten, wäßrigen Kunststoffdispersionen werden vorzugsweise auf einen Festgehalt von 30 bis 65 Gew.% eingestellt.

Für die Anwendung als Textilbindemittel können die Kunststoffdispersionen gegebenfalls noch mit den üblichen Zusatzstoffen modifiziert werden. Beispiele hierfür sind Pigmente, Antioxidantien, Farbstoffe, Weichmacher, Filmbildehilfsmittel, Füllstoffe, Flammschutzmittel, Schaumbildehilfsmittel, Schauminhibitoren, Netzmittel, Thermosensibilisierungsmittel, Antistatika, Biozide, zusätzliche Vernetzer oder Katalysatoren zur eventuell notwendigen Beschleunigung der Vernetzungsreaktion in den dazu üblichen Mengen.

Die wäßrigen Copolymerdispersionen werden zur Ausrüstung und Verfestigung von natürlichen oder synthetischen Fasermaterialien verwendet. Beispiele hierfür sind Holzfaser, Cellulosefaser, Wolle, Baumwolle, Mineralfasern, Keramikfasern, Glasfasern, Kunstfasern auf der Basis von faserbildenden Polymeren wie Viskosefaser, Polyethylen-, Polypropylen-, Polyester-, Polyamid-, Polyacrylnitril- oder Carbonfaser, Fasern von Homo- oder Copolymerisaten des Vinylchlorids oder Fasern von Homo- oder Copolymerisaten des Tetrafluorethylens. Besonders geeignet sind die wäßrigen Copolymerdispersionen zur Ausrüstung und Verfestigung von Polyesterfaser-, Keramikfaser- und Glasfaser-Materialien.

Vor der Verfestigung werden die Fasern flächenhaft ausgebreitet. Die Verfahren hierzu sind bekannt und primär von der Anwendung, in die das verfestigte Fasermaterial geht, abhängig. Die Fasern können mittels einer Luftlege-, Naßlege-, Direktspinn- oder Krempelvorrichtung ausgelegt werden. Gegebenenfalls können die Flächengebilde vor der Verfestigung mit Bindemittel noch mechanisch verfestigt werden, beispielsweise durch Kreuzlegen, Nadeln oder Wasserstrahlverfestigung.

Bei der erfindungsgemäßen Verwendung werden die wäßrigen Kunststoffdispersionen, gegebenenfalls nach vorangehendem Verdünnen mit Wasser, in üblicher Weise durch Imprägnieren, Schaumimprägnieren, Sprühen, Pflatschen, Streichen oder Bedrucken aufgetragen. Gegebenenfalls nach Abtrennen des überschüssigen Bindemittels durch beispielsweise Abquetschen, werden die textilen Gebilde bei Temperaturen von 80 bis 240°C, vorzugsweise zwischen 120 und 180°C, getrocknet und dann getempert. Je nach Anwendungsbereich liegt die für die Verfestigung des Fasermaterials notwendige Menge an Bindemittel zwischen 5 und 50 Gew% Bindemittel-Harz, bezogen auf das Fasergewicht.

Die Bindemittel eignen sich vor allem zur Verfestigung von textilen Flächengebilden, speziell aus Keramikfaser-, Polyester- oder Glasfaservliesen, welche als Trägermaterialien für Dachbahnen eingesetzt werden. Das Bindemittel verleiht den damit gebundenen Vliesen hohe Hydrophobizität, geringe Dehnung, insbesonders bei thermischer Belastung, sowie hohe Reißfestigkeit. Diese Eigenschaftskombination ist für Trägermaterialien für Dachbahnen essentiell, da bei der Beschichtung des Trägers mit Bitumen, hohe thermische Belastungen auftreten. Aufgrund der guten Haftung der Bindemittel auf anorganischen Oberflächen wird bei deren Verwendung auch eine sehr gute Einbindung von Füllstoffen erhalten.

Die nachfolgenden Beispiele dienen zur weiteren Erläuterung der Erfindung:

### Herstellung der Copolymerdispersionen:

### Beispiel 1:

In einem Laborreaktor wurden 486 g Wasser, 4.7 g einer 1 %-igen wäßrigen Fe(II)sulfatlösung, 8.2 g einer 20 %-igen wäßrigen Lösung eines Ethylenoxid-Propylenoxid-Blockcopolymers, 0.9 g einer 30 %-igen wäßrigen Lösung eines Sulfobernsteinsäurehalbesters und 2.2 g einer 25 %-igen wäßrigen Lösung von Vinylsulfonat zusammen mit 5.6 g Butylacrylat und 61.3 g Vinylacetat vorgelegt. Danach wurde eine Lösung von 1.0 g Kaliumpersulfat in 24.2 g Wasser zudosiert und auf 69°C aufgeheizt. Nach Erreichen des Temperaturgleichgewichts und Auspolymerisation der Vorlage wurden eine Lösung von 2.0 g Kaliumpersulfat in 65.2 g Wasser und ein Gemisch aus 1.6 g Decadien, 15.8 g Vinyltriethoxysilan, 233 g VeoVa9^{R} und 482 g Vinylacetat zudosiert.
Gleichzeitig wurde eine Voremulsion aus 200 g Wasser, 6.0 g Acrylsäure, 32.2 g einer 48 %-igen wäßrigen Lösung von N-Methylolacrylamid, 23.3 g einer 40 %-igen wäßrigen Lösung eines Isotridecylethoxylats mit 15 EO-Einheiten und 33.2 g einer 28 %-igen wäßrigen Lösung eines sulfatisierten Alkylethoxylats mit ca. 3 EO-Einheiten zudosiert. Nach Beendigung der Polymerisation wurde der Festgehalt der Dispersion auf 50 % eingestellt.

### Vergleichsbeispiel 1:

Es wurde analog Beispiel 1 vorgegangen, mit dem Unterschied, daß kein 1,9-Decadien copolymerisiert wurde.

### Vergleichsbeispiel 2:

Es wurde analog Beispiel 1 vorgegangen, mit dem Unterschied, daß kein N-Methylolacrylamid copolymerisiert wurde.

### Vergleichsbeispiel 3:

Es wurde analog Beispiel 1 vorgegangen, mit dem Unterschied, daß kein N-Methylolacrylamid und kein Vinyltriethoxysilan copolymerisiert wurde.

### Beispiel 2:

In einem Laborreaktor wurden 533 g Wasser, 4.7 g einer 1 %-igen wäßrigen Fe(II)sulfatlösung, 7.7 g einer 20 %-igen wäßrigen Lösung eines Ethylenoxid-Propylenoxid-Blockcopolymers, 2.3 g einer 30 %-igen wäßrigen Lösung eines Sulfobernsteinsäurehalbesters und 6.2 g einer 25 %-igen wäßrigen Lösung von Vinylsulfonat zusammen mit 6.4 g einer 48 %-igen wäßrigen Lösung von N-Methylolacrylamid, 2.0 g Acrylsäure, 7.8 g Butylacrylat und 69.5 g Vinylacetat vorgelegt. Danach wurde auf 50°C aufgeheizt. Nach Erreichen des Temperaturgleichgewichts wurden eine Lösung von 3.0 g Kaliumpersulfat in 96.8 g Wasser und eine Lösung von 1.5 g Natrium-Formaldehydsulfoxylat in 98.6 g Wasser zudosiert. Nach Auspolymerisation der Vorlage wurde ein Gemisch aus 1.6 g Decadien, 16.0 g Vinyltriethoxysilan, 9.4 g einer 85 %-igen wäßrigen Lösung von N-(Isobutoxymethyl)-acrylamid, 160 g VeoVa10^{R} und 568 g Vinylacetat zudosiert.
Gleichzeitig wurde eine Voremulsion aus 55.1 g Wasser, 6.5 g Acrylsäure, 35.9 g einer 48 %-igen wäßrigen Lösung von N-Methylolacrylamid, 69.0 g einer 25 %-igen wäßrigen Lösung eines Isotridecylalkohol-Ethylenoxids zudosiert. Nach Beendigung der Polymerisation wurde der Festgehalt der Dispersion auf 50 % eingestellt.

### Beispiel 3:

Es wurde analog Beispiel 2 vorgegangen, mit dem Unterschied, daß kein N-(Isobutoxymethyl)-acrylamid eingesetzt wurde.

### Vergleichsbeispiel 4:

Es wurde analog Beispiel 3 vorgegangen, mit dem Unterschied, daß kein Vinyltriethoxysilan copolymerisiert wurde.

### Vergleichsbeispiel 5:

Es wurde analog Beispiel 3 vorgegangen, mit dem Unterschied, daß kein 1,9-Decadien copolymerisiert wurde.

### Vergleichsbeispiel 6:

Es wurde analog Beispiel 3 vorgegangen, mit dem Unterschied, daß kein Vinyltriethoxysilan, kein 1,9-Decadien und kein N-Methylolacrylamid copolymerisiert wurde.

### Vergleichsbeispiel 7:

Es wurde analog Beispiel 3 vorgegangen, mit dem Unterschied, daß kein N-Methylolacrylamid und kein 1,9-Decadien copolymerisiert wurde.

### Vergleichsbeispiel 8:

Es wurde analog Beispiel 3 vorgegangen, mit dem Unterschied, daß kein Vinyltriethoxysilan und kein 1,9-Decadien copolymerisiert wurde.

Die Copolymer-Zusammensetzungen der Beispiele und Vergleichsbeispiele sind in Tabelle 1 zusammengefaßt.

### Anwendungstechnische Prüfung:

### Herstellung der Prüfkörper:

Ein Vliesstoff aus Polyester-Faser mit einem Flächengewicht von 130 g/m² wurde mittels Vollbadimprägnierung jeweils mit den Copolymer-Dispersionen der Beispiele oder Vergleichsbeispiele ausgerüstet. Das Bindemittel wurde dabei in einer Menge von 20 Gew.% Harz, bezogen auf das Flächengewicht des Vlieses, aufgetragen. Dazu wurde das Vlies in der auf 10 % Feststoffgehalt verdünnten Dispersion getränkt, anschließend im Foulard abgequetscht und 3 Minuten lang bei 120°C getrocknet. Aus den so ausgerüsteten Vliesen wurden in Längsrichtung 150 x 50 mm² große Prüfkörper ausgeschnitten.

### Prüfung der Wärmereißfestigkeit und der Wärmedehnung:

In einem beheizbaren Zugprüfgerät wurden die Prüfkörper mit einer Einspannlänge von 100 mm eingespannt und bei einer Temperatur von 180°C mit einer Dehnungsgeschwindigkeit von 100 mm/min gedehnt.
Es wurde die relative Reißfestigkeit Rf in N/mm² und die Dehnung der Vliese bei einer angelegten Kraft von 50 N bestimmt.

### Prüfung der Hydrophobizität durch Messung der Steighöhe

Die Prüfung erfolgte nach der Methode gemäß DIN 53924, wobei den analog obigem Verfahren ausgerüsteten Vliesen Probekörper mit einer Länge von 250 mm und einer Breite von 30 mm entnommen wurden. Die Probekörper wurden senkrecht, parallel zu einem Meßstab, über eine Schale mit gefärbtem Wasser aufgehängt und das untere Ende der Proben in das Wasser abgesenkt. Die Steighöhe wurde nach 24 Stunden an den Meßstäben abgelesen.

Die Testergebnisse sind in Tabelle 1 zusammengefaßt.

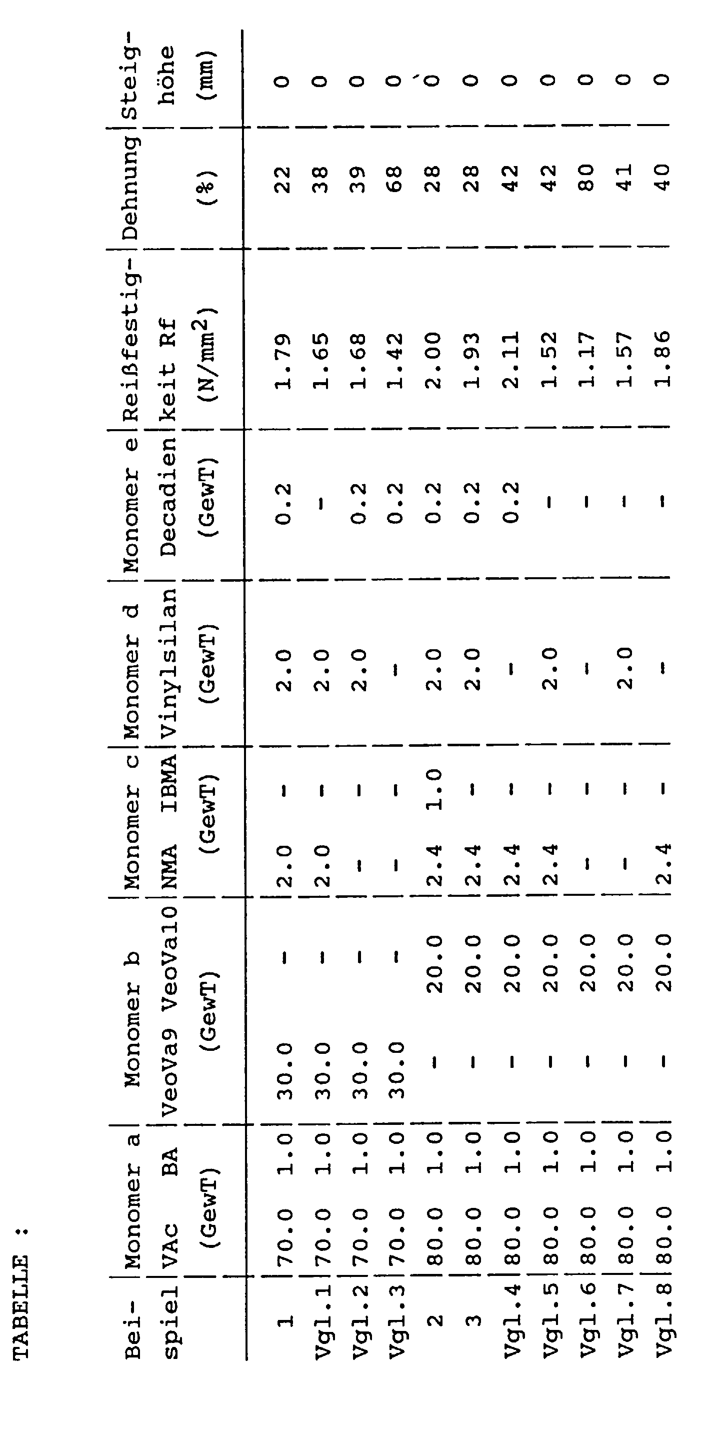

## Patentansprüche

1. Verwendung von wäßrigen Kunststoffdispersionen als Bindemittel für textile Flächengebilde, dadurch gekennzeichnet, daß als Bindemittel eine wäßrige Dispersion eines vernetzbaren und vorvernetzten Copolymerisats mit einer Glasübergangstemperatur Tg von 0 bis +80°C eingesetzt wird, herstellbar durch Emulsionspolymerisation von
a) 50 bis 90 Gewichtsteilen eines oder mehrerer Monomere aus der Gruppe der Vinylester von verzweigten oder unverzweigten Carbonsäuren mit 1 bis 4 C-Atomen, der Acrylsäureester oder Methacrylsäureester von Alkoholen mit 1 bis 10 C-Atomen und Styrol,
b) 10 bis 50 Gewichtsteile eines oder mehrerer Monomere aus der Gruppe der Vinylester von α-verzweigten Monocarbonsäuren mit 5 bis 10 C-Atomen, Vinylpivalat, Di-isopropylfumarat, Di-isopropylmaleinat, Di-tert.-butylmaleinat, Vinylchlorid,
c) 1.0 bis 10.0 Gewichtsteile eines oder mehrerer Monomere aus der Gruppe N-Methylolacrylamid, N-Methylolmethacrylamid und deren N-(Alkoxymethyl)- und N-(Acyloxymethyl)-derivate mit 1 bis 6 C-Atomen im Alkyl- oder Acyl-Rest,
d) 1.0 bis 4.0 Gewichtsteile eines oder mehrerer Monomere aus der Gruppe der olefinisch ungesättigten, hydrolysierbaren Silane, und
e) 0.1 bis 2.0 Gewichtsteile mehrfach ethylenisch ungesättigte Verbindungen.

2. Verwendung nach Anspruch 1, dadurch gekennzeichnet, daß die Copolymerisate
a) 70 bis 90 Gewichtsteile Vinylacetat-Einheiten, oder 70 bis 90 Gewichtsteile Vinylacetat- und (Meth)acrylat-Einheiten, wobei der Anteil an (Meth)acrylat-Einheiten bis zu 20 Gewichtsteile beträgt,
b) 10 bis 30 Gewichtsteile Einheiten von Vinylestern von α-verzweigten Monocarbonsäuren mit 9 bis 10 C-Atomen,
c) 1.0 bis 5.0 Gewichtsteile N-Methylolacrylamid- und/oder N-(Isobutoxymethyl)acrylamid-Einheiten,
d) 1.0 bis 3.0 Gewichtsteile Vinyltriethoxysilan- und/oder γ-Methacryloxypropyltriethoxysilan-Einheiten und
e) 0.1 bis 1.0 Gewichtsteile 1,9-Decadien- und/oder Divinyladipat-Einheiten enthalten.

3. Verwendung nach Anspruch 1 oder 2, dadurch gekennzeichnet, daß das Bindemittel zur Ausrüstung und Verfestigung von Keramikfaser-, Polyesterfaser- oder Glasfaser-Materialien verwendet wird.

4. Verwendung nach Anspruch 1 bis 3, dadurch gekennzeichnet, daß das Bindemittel zur Ausrüstung und Verfestigung von textilen Flächengebilden, welche als Trägermaterialien für Dachbahnen eingesetzt werden, verwendet wird.

## Claims

1. Use of an aqueous polymer dispersion as a binder for textile sheet materials, characterized in that the binder used comprises an aqueous dispersion of a crosslinkable and precrosslinked copolymer having a glass transition temperature Tg of 0 to +80°C, preparable by emulsion polymerization of
a) 50 to 90 parts by weight of one or monomers selected from the group consisting of the vinyl esters of branched or unbranched carboxylic acids having 1 to 4 carbon atoms, the acrylic or methacrylic esters of alcohols having 1 to 10 carbon atoms and styrene,
b) 10 to 50 parts by weight of one or more monomers selected from the group consisting of the vinyl esters of α-branched monocarboxylic acids having 5 to 10 carbon atoms, vinyl pivalate, diisopropyl fumarate, diisopropyl maleate, di-tert-butyl maleate and vinyl chloride,
c) 1.0 to 10.0 parts by weight of one or more monomers selected from the group consisting of N-methylolacrylamide, N-methylolmethacrylamide and their N-(alkoxymethyl) and N-(acyloxymethyl) derivatives having 1 to 6 carbon atoms in the alkyl or acyl radical,
d) 1.0 to 4.0 parts by weight of one or more monomers selected from the group consisting of the olefinically unsaturated hydrolysable silanes, and
e) 0.1 to 2.0 parts by weight of multiply ethylenically unsaturated compounds.

2. Use according to Claim 1, characterized in that the copolymer contains
a) 70 to 90 parts by weight of vinyl acetate units or 70 to 90 parts by weight of vinyl acetate and (meth)acrylate units, in which case the proportion of (meth)acrylate units is up to 20 parts by weight,
b) 10 to 30 parts by weight of units of vinyl esters of α-branched monocarboxylic acids having 9 to 10 carbon atoms,
c) 1.0 to 5.0 parts by weight of N-methylolacrylamide and/or N-(isobutoxymethyl)acrylamide units,
d) 1.0 to 3.0 parts by weight of vinyltriethoxysilane and/or γ-methacryloyloxypropyltriethoxysilane units, and
e) 0.1 to 1.0 parts by weight of 1,9-decadiene and/or divinyl adipate units.

3. Use according to Claim 1 or 2, characterized in that the binder is used for finishing and consolidating ceramic fibre, polyester fibre or glass fibre materials.

4. Use according to Claim 1 to 3, characterized in that the binder is used for finishing and consolidating textile sheet materials used as base materials for roofing membranes.

## Revendications

1. Utilisation de dispersions aqueuses de matières plastiques comme liant pour matériaux textiles, caractérisée en ce que l'on utilise comme liant, une dispersion aqueuse d'un copolymère réticulable ou préréticulé, ayant une température de transition vitreuse Tv de 0 à +80°C, pouvant être préparée par polymérisation en émulsion de
a) 50 à 90 parties en poids d'un ou de plusieurs monomères du groupe des esters vinyliques d'acides carboxyliques linéaires ou ramifiés avec 1 à 4 atomes de carbone, des esters d'acide acrylique ou des esters d'acide méthacrylique d'alcools ayant 1 à 10 atomes de carbone et de styrène;
b) 10 à 50 parties en poids d'un ou de plusieurs monomères du groupe des esters vinyliques d'acides monocarboxyliques α-ramifiés ayant 5 à 10 atomes de carbone, le pivalate de vinyle, le fumarate de diisopropyle, le maléate de diisopropyle, le maléate de di-t-butyle, le chlorure de vinyle;
c) 1,0 à 10,0 parties en poids d'un ou de plusieurs monomères du groupe du N-méthylolacrylamide, du N-méthylolméthacrylamide et de leurs dérivés N-(alcoxyméthyle) et N-(acyloxyméthyle) ayant 1 à 6 atomes de C dans le radical alcoyle ou acyle;
d) 1,0 à 4,0 parties en poids d'un ou de plusieurs monomères du groupe des silanes oléfiniquement insaturés hydrolysables, et
e) 0,1 à 2,0 parties en poids de composés plusieurs fois éthyléniquement insaturés.

2. Utilisation suivant la revendication 1, caractérisée en ce que le copolymère contient :
a) 70 à 90 parties en poids de motifs acétate de vinyle, ou
70 à 90 parties en poids d'unités acétate et (méth)acrylate de vinyle, la proportion d'unités (méth)acrylate s'élevant à jusqu'à 20 parties en poids,
b) 10 à 30 parties en poids d'unités d'esters vinyliques d'acides monocarboxyliques α-ramifiés ayant 9 à 10 atomes de C;
c) 1,0 à 5,0 parties en poids d'unités N-méthylolacrylamide et/ou N-(isobutoxyméthyl)acrylamide;
d) 1,0 à 3,0 parties en poids d'unités vinyltriéthoxysilane et/ou γ-méthacryloyloxypropyltriéthoxysilane, et
e) 0,1 à 1,0 parties en poids d'unités 1,9-décadiène et/ou adipate de divinyle.

3. Utilisation suivant les revendications 1 ou 2, caractérisée en ce que le liant est utilisé pour l'équipement et le renforcement de matériaux en fibres céramiques, en fibres de polyester ou en fibres de verre.

4. Utilisation suivant les revendications 1 à 3, caractérisée en ce que le liant est utilisé pour l'équipement et le renforcement de matériaux textiles, lesquels sont introduits comme matériaux support pour les cartons goudronneux.
